# EUROPEAN PATENT APPLICATION

(11) **EP 1 465 097 A2**
(43) Date of publication of application: **06.10.2004**
(21) Application number: 04006941.1
(22) Date of filing: 23.03.2004
(51) Int. Cl.: G06F 17/60

(54) **System for maintaining qualification of operator using authentication recording medium, and authentication recording medium**

(30) Priority: 24.03.2003 JP 2003079831
(71) Applicant: Hitachi Electronics Services Co., Ltd., Kanagawa (JP)
(72) Inventor: Ishizuka, Shinji, Totsuka-ku Yokohama-shi Kanagawa (JP); Yano, Toshiyuki, Totsuka-ku Yokohama-shi Kanagawa (JP); Kubo, Michihiko, Totsuka-ku Yokohama-shi Kanagawa (JP); Hata, Hiroshi, Totsuka-ku Yokohama-shi Kanagawa (JP); Nakamura, Masami, Totsuka-ku Yokohama-shi Kanagawa (JP); Doi, Toshiyuki, Totsuka-ku Yokohama-shi Kanagawa (JP); Yamamoto, Kousei, Totsuka-ku Yokohama-shi Kanagawa (JP); Yamagishi, Norikazu, Totsuka-ku Yokohama-shi Kanagawa (JP); Takesada, Mutsuharu, Totsuka-ku Yokohama-shi Kanagawa (JP); Habara, Takaaki, Totsuka-ku Yokohama-shi Kanagawa (JP)
(74) Representative: TER MEER STEINMEISTER & PARTNER GbR

(57) **Abstract**

The system comprises an authentication recording medium 1 storing a readable identification authentication data for reading and a readable/writable skill authentication data, a mobile terminal 2 having an authentication recording medium read/write device 21, a data management server 3 and a training PC 4 for education, wherein data is sent and received between mobile terminal 2 and data management server 3, andbetween server 3 and PC 4. Data management server 3 collects and analyzes data related to maintenance operation and education such as self-learning and training sessions that the operator completes, and enables the result to be downloaded to the recording medium 1 and stored therein so that the operator with the qualification required for operation is authenticated to perform management and maintenance of the object system or device 8.

## Description

### FIELD OF THE INVENTION

The present invention relates to a system for maintaining qualification of an operator using an authentication recording medium and the authentication recording medium used for the system, and specifically, relates to the system for maintaining a certain qualification or quality of skill of the operator managing and maintaining the system or device to be managed/maintained, and the electronic recording medium for authentication used in that system.

### DESCRIPTION OF THE RELATED ART

Heretofore, most server/disk subsystem appliances are subjected to management andmaintenance operations by an operator (maintenance personnel) via a service processor (SVP: terminals (PCs) for carrying out maintenance operations).

However, such maintenance operations using SVP may, by error or by unauthorized manipulation, cause serious damage to the customer's system such as shutdown of the system and/or destruction of data, so sufficient management of the operation becomes necessary.

Conventionally, in order to cope with such problems, the operation of the SVP is administrated using physical keys and/or passwords, but still, there remainpossibilities of unauthorized operations being performed using copied keys and/or stolen passwords.

There has been proposed an operator education system which enables an operator to perform self-learning of a skill for carrying out each operation process in a product line (refer for example to Patent Document 1).

### Patent Document 1:

Japanese Patent Laid-Open Publication No. 2002-279019

### SUMMARY OF THE INVENTION

The aim of the present invention is to maintain the qualification and quality of the management/maintenance operation (hereinafter simply called "maintenance operation" or "operation" in some cases) to a determined level, by having an operator carry an electronic recording medium to be used for authentication (authentication recording medium) storing the identification authentication data and the skill authentication data of the operator, and when management/maintenance operation of the system or device to be managed/maintained is to be carried out, the system confirms the identification of the operator and confirms that the operator has the skill required for performing the operation based on the data stored in the authentication recording medium.

In order to maintain the quality of the skill of the operator, the above-mentioned skill authentication data can be updated when the operator performs self-learning and/or attends training sessions and improves his/her skill level.

In order to achieve the above objects, the present invention provides a system for maintaining qualification of an operator using an authentication recording medium comprising an authentication recording medium 1, a mobile (portable) terminal 2, a data management server 3, a terminal (PC) 4 for education or the like, a communication network NW 5 and a local area network (LAN) 6, wherein the authentication recording medium 1 stores readable identification authentication data and readable/writable skill authentication data; the mobile terminal 2 comprises an authentication recording medium read/write device 21 and has a function to send and receive data between the data management server 3 via the communication network 5; the data management server 3 manages the data of the present system, andhas a function to send and receive data between the mobile terminal 2 via the communication network 5 and between the PC 4 via the LAN 6; and the PC 4 for education comprises an authentication recording medium read/write device 43, and has a function to enable an operator to perform self-learning and a function to send and receive data between the data management server 3 via the LAN 6.

In the above system, the skill authentication data stored in the authentication recording medium 1 includes "operation authority for the system or device to be managed/maintained", "operation qualification level", "expiration date of operation qualification level" and "contents of operation record (history) (including time, number of times and name of apparatus)".

Further, in the above system, the skill authentication data stored in the authentication recordingmedium 1 further includes "data regarding work (operation) status (continuous work time)" and "past quality management data (such as operation error)".

According to the present system, the authentication recording medium 1 holds a function to receive identification authentication based on the stored identification authentication data and to receive authentication for performing a determined range of operation based on the skill authentication data by being inserted to an authentication recording medium read/write device 73 of a maintenance operation terminal 7 for performing management and maintenance of a system or device to be managed/maintained.

According to the present system, the mobile terminal 2 has a function to read the data stored in the authentication recording medium 1 and transfer (send) the same to the data management server 3 via the communication network 5, and a function to additionally record or update the data received from the data management server 3 in the authentication recording medium 1.

In the present system, the data management server 3 comprises a database (DB) 31 storing data regarding work (operation) status and a DB 32 for storing quality management data, and has a function to collect and analyze the uploaded data, make a decision and download the decision contents to the authentication recording medium 1.

The contents to be downloaded to the authentication recording medium 1 include "operation authority for system or device to be managed/maintained", "operation qualification level" and "expiration date of operation qualification level".

Further, the contents to be downloaded to the authentication recording medium include "data regarding work (operation) status (continuous work time) " and "past quality management data (such as operation error)".

In the present system, upon receiving an urgent operation approval data registeredby an administrator, the data management server 3 holds a function to download the data via the mobile terminal 2 to the authentication recording medium 1.

In the present system, the PC for education comprises an authentication recording medium data read/write AP 41, an educational AP and work AP 42, and has a function to provide educational material for self-learning regarding various operations, and a function to transmit a result of learning performedby the operator to the data management server 3, receive a content of determination from the data management server 3 and additionally record/update the same to the authentication recording medium 1.

Moreover, the present system further comprises a terminal 7 used for maintenance operation for managing/maintaining the system or device to be managed/maintained, the terminal comprising an operation AP 71, an authentication AP 72 for the authentication recording medium and an authentication recording medium read/write device 73, the terminal having a function to read the data recorded in the authentication recording medium 1 through the authentication recording medium read/write device 73, confirm identification authentication based on the identification authentication data, and authenticate a certain range of operation based on the skill authentication data.

In the present system, after performing maintenance operation, the terminal for maintenance operation 7 has a function to log the contents of an operation record and to store the contents of the operation record to the authentication recording medium 1.

The authentication recording medium 1 used in the system for maintaining qualification of an operator stores readable identification authentication data and readable/writable skill authentication data, and when inserted to an authentication recording medium read/write device 73 of a terminal 7 for maintenance operation used for managing/maintaining a system or device to be managed/maintained, the medium has a function to receive identification authentication based on the stored identification authentication data and to receive authentication to perform a certain range of operation based on the skill authentication data.

The skill authentication data stored in the above-mentioned authentication recording medium 1 includes "operation authority for system or device to be managed/maintained", "operation qualification level", "expiration date of operation qualification level" and "contents of operation record (including time, number of times and name of apparatus)".

Furthermore, the skill authentication data stored in the authentication recording medium 1 includes "data regarding work (operation) status (continuous work time)" and "past quality management data (such as operation error)".

Even further, the authentication recording medium 1 holds a function to download and record an urgent operation approval data from the data management server 3 via the mobile terminal 2.

### BRIEF DESCRIPTION OF THE DRAWINGS

FIG. 1 is a conceptual diagram showing the qualification maintenance system of the operator using the authentication recording medium according to the present invention;
FIG. 2 is a flowchart showing the process for performing the maintenance operation;
FIG. 3 is a flowchart showing the process for updating the qualification level;
FIG. 4 is a flowchart showing the approval for an urgent operation; and
FIG. 5 is a flowchart showing the process after the termination of operation.

### DETAILED DESCRIPTION OF THE PREFERRED EMBODIMENT

The preferred embodiments of the present invention will now be explained with reference to the accompanied drawings.

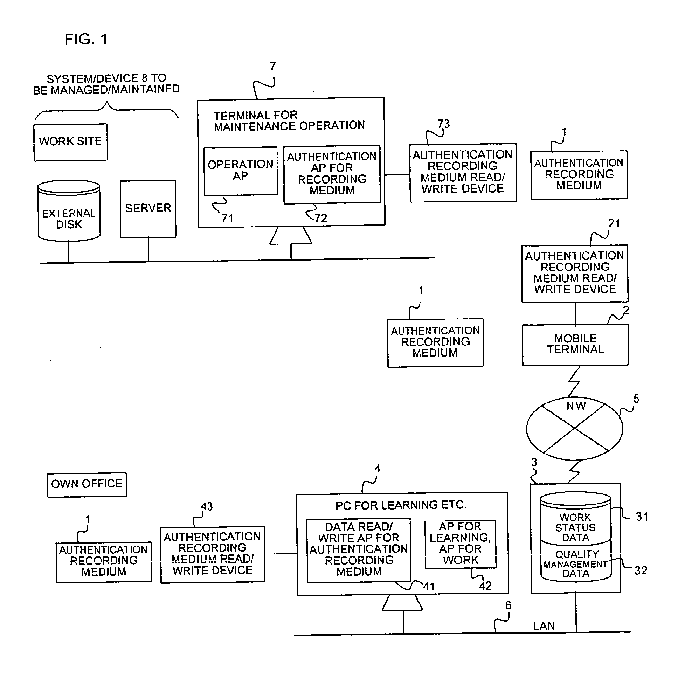

FIG. 1 is a conceptual diagram showing the system for maintaining qualification of an operator using an authentication recording medium according to the present invention.

Reference number 1 denotes an authentication recording medium such as an IC card or a memory stick recording identification authentication data and skill authentication data. Reference number 2 denotes a portable (mobile) terminal comprising a read/write device 21 for the authentication electronic recording medium, 3 denotes a data management server for managing the data of the present system and comprises a database (DB) 31 for storing data related to work (operation) statuses and a DB 32 for storing qualitymanagement data, 4 denotes a PC (terminal) for education etc. comprising a data read/write AP 41 for the authentication recording medium, an educational AP andworkAP 42, and a read/write device 43 for the authentication recording medium, 5 denotes a communication network for connecting the mobile terminal 2 to the data management server 3, 6 denotes a LAN (local area network) for connecting the PC 4 for education etc. to the data management server 3, and 7 denotes a SVP (service processor, which is a terminal such as a PC for performing maintenance operation) comprising an operation AP 71, an authentication AP 72 for the authentication electronic recording medium and a read/write device 73 for the authentication electronic recording medium used for managing and maintaining a system or device (server, external disk etc.) 8 of the customer to be managed and maintained.

The above mentioned authentication electronic recording medium 1 stores "affiliation, name, password etc." as identification authentication data.

It also stores as skill authentication data at least the "qualification level", "operation authority to work on system or device to be managed/maintained", "operation record (history) of operator (such as time, number of times and name of apparatus) and "expiration date of qualification level" . It further stores "data related to work (operation) status (continuous work time)" and "past quality management data (such as operation error)", and all these data can be additionally recorded or updated. In such case, the recording date is also stored.

The skill authentication data of the operator stored in the authentication recording medium 1 is determined by attending educational training courses for management/maintenance operation of the system or device to be managed/maintained, and acquiring a predetermined skill level. The levels can include, for example, "general", "first level operator (maintenance personnel)", "second level operator", "technical support personnel", "authorized to operate SVP" and so on. Further, refresh education (such as self-learning and training sessions) will be performed once in a while or periodically so as to manage the skills of the operator and review the operation authorization, to thereby reduce maintenance operation errors.

Thus, the operator having the skills required for a certain operation can be authorized, and the quality of the management and maintenance operations can be maintained at a determined level.

By storing the data on the authority that the operator has to operate on the system or device to be managed and maintained in the authentication recording medium 1, the operator is restrictedfromoperatingbeyondtheboundsofhis/herdetermined operation authority. Furthermore, by storing the contents of the operation record of the operator (such as the time, number of times of operation andname of apparatus) to the authentication recording medium 1 and uploading the data to the data management server, the server can determine from the data the skill experience level of the operator, confirm the qualification level of the operator being recorded currently and manage the proficiency level and experience of the operator.

Further, by storing to the authentication recording medium 1 the "data related to work (operation) status (continuous work time)" and "past quality management data (such as operation error) " prior to operation, the operation quality of the operator can be maintained based on factors other than qualification levels, such as work status and personal quality management factors.

If the operator is dispatched to the customer to perform management and maintenance operation of the system or device to be managed, the operator inserts his/her authentication recording medium 1 that he/she carries to the authentication recording medium read/write device 73 of the SVP 7 attached to the system or device 8 to be managed, and enters a password etc. to receive confirmation of identification authentication.

Next, whether the operator has the authority to operate on the system or device to be managed, and whether the skill level has not expired, are determined. If the operator does not have the operation authority, the operation cannot be performed. If the expiration date of the skill level has expired, the operator cannot perform operation even if he/she has the authority.

Only after both are authenticated, the operator can perform determined management and maintenance operation to the system or device 8 to be managed through use of the SVP 7.

By managing the expiration date of the skill level, when the expiration date of the skill level is to be expired, a warning can be output in advance so that the operator can attend a self-learning program and/or a training session based on a training system so that he/she can acquire the determined qualification level and re-record (update) the expiration date of the skill level.

It is possible to maintain the quality of the qualification level by automatically degrading the operation authority when the operator does not attend a self-learningprogramor a training session.

When the management/maintenance operation by the operator has been completed, the operator logs the contents of the operation record to the SVP 7 attached to the system or device 8 to be managed and maintained. The contents of the operation record is also additionally stored in the authentication recording medium 1 through the authentication recording medium read/write device 73 by the operator.

The contents of the operation record stored additionally to the authentication recording medium 1 is transferred to the data management server 3 by inserting the recording medium 1 to the authentication recording medium read/write device 21 of the mobile terminal 2 and connecting the terminal via a communication network 5 to the data management server 3. The data management server 3 determines the skill experience level based on the contents, confirms the qualification level of the operator on record, and manages the proficiency level and experience of the operator to use as source for judgment in the future.

Further, if a single operation is being performed continuously for a long time in the management and maintenance operation by the operator, it is possible to determine that the skill level of the operator regarding that particular operation is low, and a warning message can be output to stop further operation and to advise the operator to attend training to acquire the skill level required for the operation.

Upon receiving this advise, the operator can acquire the skill (qualification) for that operation using the educational system either by performing a determined self-learning or by attending a seminar (educational class) related to that operation in a training session and the like.

When a determined qualification level has been acquired by self-learning, the result is stored in the authentication recording medium 1, so the operator can transmit (upload) the data to the data management server 3 via the mobile terminal 2.

The qualification level is determined by the data received by the data management server 3, and the operator receives (downloads) the determined level data through the mobile terminal 2 and updates the qualification level data or the like stored in the authentication recording medium 1.

The data that can be updated are "system and/or device with operation authority","expiration date of qualification level", "effective number of times" and "qualification level".

Further, when an operator attends a class related to an operation in a training session or the like, the result of the training is sent from the organization holding the session to the data management server 3, and the data is stored as the skill record data of the operator and used for determination or source for future judgment. Further, the trainee (operator) can download the determined contents from the data management server 3 to the authentication recording medium 1 to thereby update the qualification level data.

As explained, according to the present system, the contents of the operation record or history regarding the system or device to be managed and maintained is uploaded to the data management server 3 and is also stored in the authentication recordingmedium 1, but if according to the data the operator has not yet experienced operation of the system or device to be managed, or if there is no operation record within the qualification level expiration date, the rank of the qualification level can be degraded.

According to the above data, the system determines that the operator lacks experience even if the operator has achieved a certain qualification level.

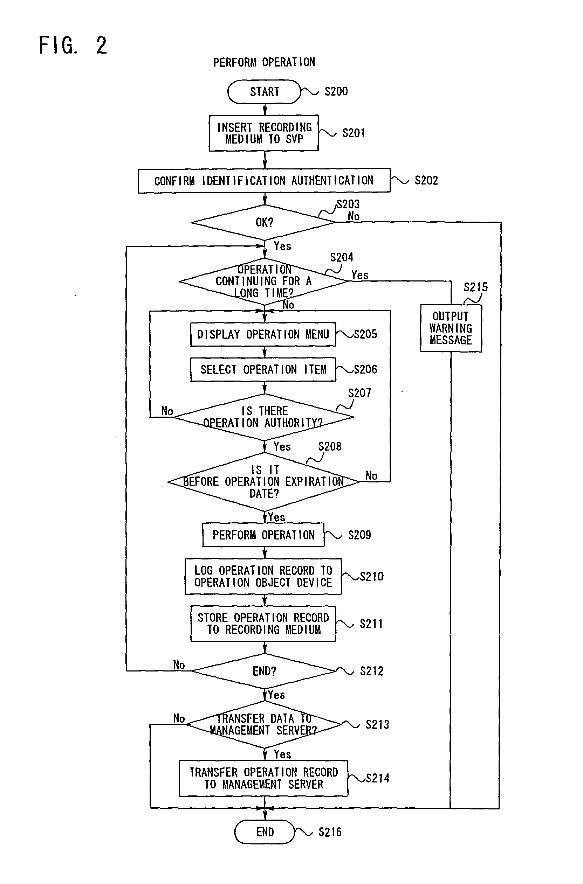

FIG. 2 is a flowchart showing the process for performing the maintenance operation.

The process starts at step S200, and in step S201, the operator inserts the authentication recording medium 1 into the SVP 7 attached to the device to be subjected to maintenance operation (system or device 8 to be managed). In step S202, the identification authentication of the operatorisconfirmed using a password or the like. In step S203, whether the authentication confirmation is OK or not is determined, and if it is not OK, the operation cannot be carried out, and the process is terminated (step S216).

If the identification authentication is confirmed, the procedure advances to step S204 where whether a single operator is operating continuously for a longperiodof time is determined.

If "No", the procedure advances to step S205 where the operation menu is displayed. In step 5206, the operator selects the operation item.

In step S207, whether the operator has the operation authority for the selected operation item or not is determined based on the data stored in the authentication recording medium 1, and if not, the procedure returns to step S205, but if the operation authority exists, it is determined in step S208 whether the operation expiration date has expired or not. If the expiration date has expired, the procedure returns to step S205, but if it the expiration date has not yet expired, the procedure advances to step S209 where the operation (selected operation item) is carried out for the device to be operated (system or device 8 to be managed and maintained, or SVP 7 according to FIG. 1).

In step 5210, the operator logs the operation record contents to the SVP 7 attached to the device to be operated, and in step S211 the contents of the operation record of the device to be operated (system or device 8 subjected to management and maintenance) is stored in the recording medium.

In step S212 it is determined whether all operations have been completed or not, and if "No", the procedure returns to step S204, and if "Yes", the procedure advances to step S213 where it is determined whether the contents of operation record should be transferred to the data management server 3, and if "No", the procedure is terminated (step S216)", but if "Yes", the procedure advances to step S214 where the operator inserts the authentication recording medium 1 to the mobile terminal 2, and transfers the data via the communication network 5 to the data management server 3, and the procedure is ended at step S216.

If it is determined in step S204 that the operation is performed continuously for a long period of time, the procedure outputs a warning message in step S215, and the procedure is ended (step S216).

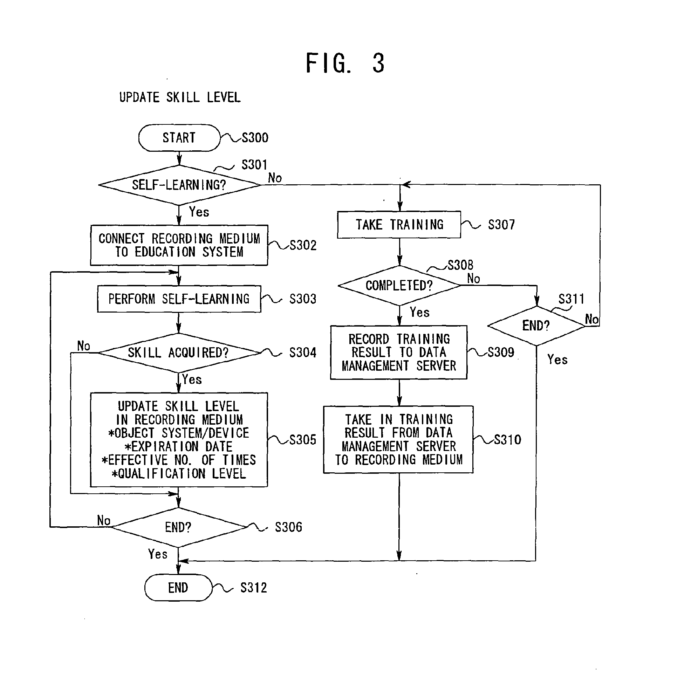

FIG. 3 is a flowchart showing the procedure for updating the qualification level of the operator.

The procedure starts at step S300, and in step S301 the operator determines whether he/she wishes to perform self-learning, and if self-learning is selected, the procedure advances to step S302 where the authentication recording medium 1 is connected (inserted) to the authentication recording medium read/write device 43 of the learning PC 4 of the educational system, and the operator performs self-learning in step S303.

In step S304, the educational system judges whether the skill has been learned, and when it is determined that the skill has been learned, in step 5305, the data such as the qualification level stored in the authentication recording medium 1 and the data management server 3 are updated. The updated data are "system or device for which the operator has authority to operate", "expiration date of qualification level", "effective number of times" and "qualification level".

When it is not determined that the skill has been learned, the procedure advances to step S306. In step S306, whether to end self-learning or not is determined, and if not, the procedure returns to step S303.

If self-learning is not selected in step S301, the operation is learned in a training session or the like in step S307.

In step S308, the instructor determines whether the training session has been completed or not, and if not, in step S311 the trainee (operator) determines whether to end educational session, and if not, the procedure returns to step S307.

If terminated, the instructor records the educational session training result to the data management server 3. In step S310, the trainee retrieves the training result from the data management server 3 to the authentication recording medium 1, and the procedure is ended in step S312.

There may be cases where urgent operation must be performed to the device to be managed (system or device 8 to be managed and maintained).

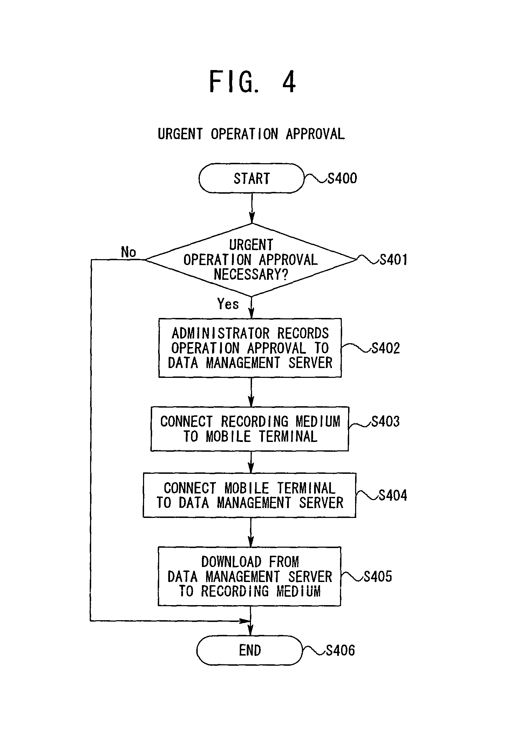

FIG. 4 is a flowchart showing the process in such a case where urgent operation is approved without being bound by the qualification authentication data stored in the authentication recording medium 1.

The procedure starts at step S400, and in step S401, the administrator determines whether urgent operation approval is necessary or not. If not necessary, the procedure advances to step S406, but if necessary, in step S402 the administrator records approval for operation to the data management server 3.

Actually, the administrator enters (records) the conditions for approval of the operation. The conditions include, for example, "this operation only", "multiple operations permitted", "only in the same site" and "record administrator decision when terminating".

In step S403, the operator connects (inserts) the authentication recording medium 1 to the mobile terminal 2, and in step S404, the mobile terminal 2 is connected to the data management server 3 via the communication network 6.

Thereby, in step 5405, the above-mentioned urgent operation approval is downloaded from the data management server 3 to the authentication recording medium 1, and the procedure is ended in step S406.

After completing the urgent operation, the above operation approval is deleted.

We will now explain the process carried out by the operator according to the present system when the management and maintenance operation for the object system or device 8 is completed.

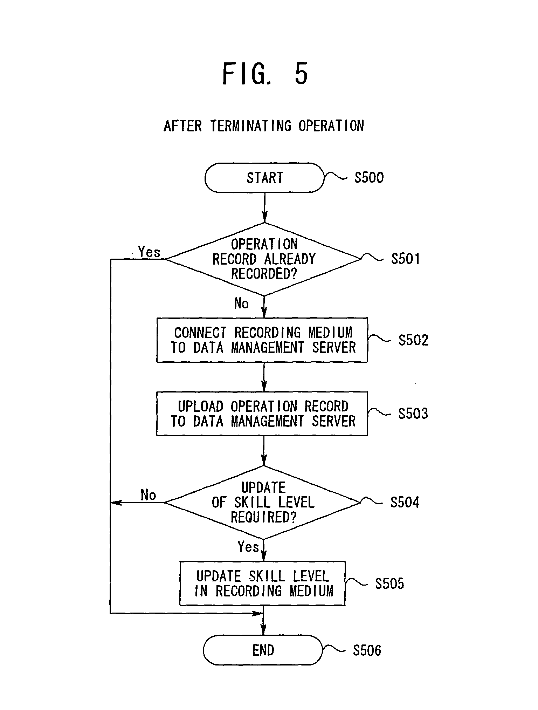

FIG. 5 is a flowchart of the process to be performed after the termination of the operation.

The process is started in step S500, and in step S501, it is determined whether the operation record contents are stored in the data management server 3 by the operator, and if already stored, the procedure advances to step S506. If not, the authentication recording medium 1 is inserted to the mobile terminal 2 in step S502, the recording medium 1 is connected to the data management server 3 via the communication network 5, and in step S503 the operation record contents are uploaded to the data management server 3.

In step S504, the operator determines whether the update of the qualification level stored in the authentication recording medium 1 is necessary or not, and if not, the procedure advances to step 5506. If necessary, in step S505 the qualification level of the authentication recording medium 1 is updated by downloading the data from the data management server 3, and the procedure is terminated in step S506.

The present invention has the following effects.
(1) Since the authority to operate on certain electronic devices (system or device to be managed and maintained in FIG. 1) is stored in the authentication recording medium of the operator, it is possible to prevent the operator from working beyond his/her authority based on the stored data.
(2) Since the contents of the operation record can be stored in the authentication recording medium of the operator, the system can determine the skill (qualification) experience level of the operator based on the data, confirm the qualification level of the operator being on record at that time, and manage the proficiency level or experience of the operator.
(3) Since the operator's skill (qualification) level can be refreshed by training and the expiration date of the skill (qualification) level of the training canbe managedby the system, the skill level of the operator can be managed effectively, and if the expiration date is close, the system can output a warning. If the operator does not receive appropriate training, the work authority of the operator can be degraded, by which the quality of the operation can be maintained.
(4) Since the operator takes with him/her the authentication recording medium, the medium can be used commonly for any system or device to be managed and maintained according to the present system.

## Claims

1. A system for maintaining qualification of an operator using an authentication recording medium comprising an authentication recording medium, a mobile terminal, a data management server, a terminal (PC) for education, a communication network and a local area network (LAN), wherein
the authentication recording medium stores readable identification authentication data and readable/writable skill authentication data;
the mobile terminal comprises an authentication recording medium read/write device and has a function to send and receive data between the data management server via the communication network;
the data management server manages the data of the system, and has a function to send and receive data between the mobile terminal via the communication network and between the PC via the LAN; and
the PC for education comprises an authentication recording mediumread/write device, and has a function to enable an operator to perform self-learning and a function to send and receive data between the data management server via the LAN.

2. The system for maintaining qualification of an operator using an authentication recording medium according to claim 1, wherein
the skill authentication data stored in the authentication recording medium includes "operation authority for system or device to be managed/maintained", "operation qualification level", "expiration date of operation qualification level" and "contents of operation record (including time, number of times and name of apparatus)".

3. The system for maintaining qualification of an operator using an authentication recording medium according to claim 2,
wherein
the skill authentication data stored in the authentication recording medium further includes "data regarding work (operation) status (continuous work time)" and "past quality management data (such as operation error)".

4. The system for maintaining qualification of an operator using an authentication recording medium according to any one of claims 1 through 3, wherein
the authentication recording medium has a function to receive identification authentication based on the stored identification authentication data and to receive authentication for performing a determined range of operation based on the skill authentication data by being inserted to an authentication recording medium read/write device of a maintenance operation terminal for performing management and maintenance of a system or device to be managed/maintained.

5. The system for maintaining qualification of an operator using an authentication recording medium according to any one of claims 1 through 4, wherein
the mobile terminal has a function to read the data stored in the authentication recording medium and transfer (send) the same to the data management server via the communication network, and a function to additionally record or update the data received from the data management server in the authentication recording medium.

6. The system for maintaining qualification of an operator using an authentication recording medium according to any one of claims 1 through 5, wherein
the data management server comprises a database for data regarding work (operation) status and a database for quality management data, and has a function to collect and analyze the uploaded data, make a decision and download the decision contents to the authentication recording medium.

7. The system for maintaining qualification of an operator using an authentication recording medium according to claim 6, wherein
the contents to be downloaded to the authentication recording medium include "operation authority for system or device to be managed/maintained", "operation qualification level" and "expiration date of operation qualification level".

8. The system for maintaining qualification of an operator using an authentication recording medium according to claim 7, wherein
the contents to be downloaded to the authentication recording medium further include "data regarding work (operation) status (continuous work time)" and "past quality management data (such as operation error)".

9. The system for maintaining qualification of an operator using an authentication recording medium according to any one of claims 6 through 8, wherein
upon receiving an urgent operation approval data registered by an administrator, the data management server holds a function to download the data via the mobile terminal to the authentication recording medium.

10. The system for maintaining qualification of an operator using an authentication recording medium according to any one of claims 1 through 9, wherein
the PC for education comprises an authentication recording medium data read/write AP, an educational AP and a work AP, and has a function to provide educational material for self-learning regarding various operations, and a function to transmit a result of learning performed by the operator to the data management server, receive a content of determination from the data management server and additionally record/update the same to the authentication recording medium.

11. The system for maintaining qualification of an operator using an authentication recording medium according to any one of claims 1 through 10, wherein
the system further comprises a maintenance operation terminal for managing/maintaining the system or device to be managed/maintained, the terminal comprising an operation AP, an authentication AP for the authentication recording medium and an authentication recording medium read/write device, the terminal having a function to read the data recorded in the authentication recording medium through the authentication recording medium read/write device, confirm identification authentication based on the identification authentication data, and authenticate a certain range of operation based on the skill authentication data.

12. The system for maintaining qualification of an operator using an authentication recording medium according to claim 11, wherein
after performing maintenance operation, the terminal for maintenance operation has a function to log the contents of an operation record and to store the contents of the operation record to the authentication recording medium.

13. An authentication recording medium used in a system for maintaining qualification of an operator, wherein
the authentication recording medium stores readable identification authentication data and readable/writable skill authentication data, and when inserted to an authentication recording medium read/write device of a terminal for maintenance operation used for managing/maintaining a system or device to be managed/maintained, the medium has a function to receive identification authentication based on the stored identification authentication data and to receive authentication to perform a certain range of operation based on the skill authentication data.

14. The authentication recording medium according to claim 13, wherein
the skill authentication data includes "operation authority for system or device to be managed/maintained", "operation qualification level", "expiration date of operation qualification level" and "contents of operation record (including time, number of times and name of apparatus)".

15. The authentication recording medium according to claim 14, wherein
the skill authentication data further includes "data regarding work (operation) status (continuous work time)" and "past quality management data (such as operation error)".

16. The authentication recording medium according to claim 14 or claim 15, wherein
the medium holds a function to download and record an urgent operation approval data from the data management server via the mobile terminal.
